# EUROPÄISCHE PATENTSCHRIFT

(11) **EP 1 388 487 B1**
(45) Veröffentlichungstag und Bekanntmachung des Hinweises auf die Patenterteilung: **04.06.2008**
(21) Anmeldenummer: 03017741.4
(22) Anmeldetag: 04.08.2003
(51) Int. Cl.: B62D 25/14

(54) **Querträgeranordnung für ein Fahrzeug**
Crossbeam assembly for a vehicle
Ensemble de poutre transversale pour un véhicule

(30) Priorität: 09.08.2002 DE 10236524
(43) Veröffentlichungstag der Anmeldung: 11.02.2004
(73) Patentinhaber: Behr GmbH & Co. KG, 70469 Stuttgart (DE)
(72) Erfinder: Wolf, Walter, Dipl.-Ing., 71570 Oppenweiler-Zell (DE)
(74) Vertreter: Grauel, Andreas

(56) Entgegenhaltungen:
- FR-A- 2 722 750
- GB-A- 2 065 038
- US-A- 3 863 731
- US-A- 4 317 582
- US-B1- 6 428 045

## Beschreibung

Die Erfindung betrifft eine Querträgeranordnung für ein Fahrzeug mit einem zwischen seitlichen Karosserieflächen angeordneten Grundträger zur Aufnahme von Funktionselementen.

Derartige Querträger erstrecken sich beispielsweise im Rahmen einer Fahrzeugstruktur zwischen zwei Randbereichen, insbesondere im Bereich zwischen den beiden vorderen A-Säulen quer zur Fahrzeuglängsachse. An diesen Grund- oder Querträger sind im allgemeinen die Lenksäule, ein Airbag, sowie Halter für weitere Instrumente, insbesondere eine Instrumententafel befestigt. Ein derartiger Quer- oder Instrumententräger ist üblicherweise im Bereich der Lenkspindel oder Lenksäule an einer Karosseriefläche, insbesondere einer Stirnwand oder Querträger unter der Windschutzscheibe, abgestützt. Eine derartige Abstützung soll dabei eine Intrusion der Lenksäule ebenso verhindern, wie deren Aufstellung bei einer mechanischen Beanspruchung, z.B. im Crashfall. Hierzu werden üblicherweise sogenannte Konsolen oder Streben verwendet, welche ein erhebliches Gewicht aufweisen. Ein derartiger Quer- oder Instrumententräger ist beispielsweise aus der DE 197 15 069 A1 oder DE 100 40 824 A1 bekannt.

Ferner zeigt die GB-A-2 065 038 gemäß dem Oberbegriff des Anspruchs 1, eine Trägeranordnung, an welcher eine Heizungs- oder Klimaanlage über Streifen oder Bänder gehaltert ist.

Aufgabe der Erfindung ist es, eine Querträgeranordnung für ein Fahrzeug mit einem zwischen seitlichen Karosserieflächen angeordneten Grundträger zur Aufnahme von Funktionselementen anzugeben, welche besonders einfach und leicht ausgebildet ist.

Die Aufgabe wird erfindungsgemäß gelöst durch eine Querträgeranordnung der oben genannten Art, bei der der Grundträger zumindest teilweise zugfest gehalten ist.

Die Erfindung geht dabei von der Überlegung aus, dass die herkömmliche durch starre Konsolen oder Streben abgestützte und dabei besonders aufwändige und schwere Anordnung vermieden werden sollte. Dabei sollte bei sich eigentlich widersprechenden Anforderungen - Reduzierung des hohen Gewichts bei gleichzeitig hinreichendem Gegenmoment zur Vermeidung eines Aufstellens oder einer Intrusion eines Funktionselements, z.B. einer Lenksäule im Crashfall - der Grundträger besonders stabil und sicher abgestützt werden. Dazu ist der Grundträger zumindest teilweise mittels eines Seilelements zugfest gehalten. Hierbei wird eine in Folge einer mechanischen Beanspruchung sich ergebende Intrusion bzw. Aufstellung der Lenksäule oder eines anderen Funktionselements nach innen in einen Fahrgastraum durch ein mittels einer Zugkraft erzeugten Gegenmoments sicher vermieden.

Für eine besonders hohe Stabilität der Anordnung des Grundträgers in der Fahrzeugstruktur ist der Grundträger in Querrichtung, insbesondere zwischen den seitlichen Karosserieflächen, druckfest befestigt. Dazu ist der Grundträger beispielsweise über Halteelemente an in Längsrichtung verlaufenden Karosserieträgern oder Karosserieseitenflächen mittels starren Streben oder Konsolen befestigt.

Zur Aufrechterhaltung der Position eines Funktionselements, z.B. einer am Grundträger befestigten Lenksäule, bei einer mechanischen Beanspruchung, wie sie beispielsweise bei einem Crash auftritt, ist der Grundträger bevorzugt in Längsrichtung zugfest gehalten.

Für ein hinreichendes Gegenmoment bei einer mechanischen Beanspruchung ist das Seilelement zweckmäßigerweise an einem weiteren Karosserieträger oder an einer Druckstrebe befestigt. Durch eine derartige Anbindung des Seilelements an eine Druckstrebe, welche vorzugsweise Sollknickstellen aufweist, bleibt über eine vorgegebene und somit abgestimmte Verformung der Druckstrebe an den Sollknickstellen im Crashfall die Position der Lenksäule oder anderer Funktionselemente weitgehend erhalten. Darüber hinaus ist das Seilelement durch die Befestigung an einem Karosserieträger oder an einer Druckstrebe besonders einfach zu montieren und zu positionieren. Als einfacher Träger dient insbesondere der unter der Windschutzscheibe angeordnete Querträger der Karosserie.

Für eine besonders schnelle Erzeugung des Gegenmomentes im Falle von mechanischen Beanspruchungen sowie für eine hinreichende Vorspannung des Seilelements ist dieses aus einem Stahldraht gebildet. Soll das Seilelement neben Zugkräfte auch Druckkräfte aufnehmen, so ist das Seilelement zweckmäßigerweise in einem Hohlprofil, z.B. in einem Rohr geführt.

Zur Einstellung der Vorspannung sowie eines Toleranzausgleiches ist das Seilelement zweckmäßigerweise an einem Ende fixiert und am gegenüber liegenden Ende vorspannbar gehalten. Dazu wird ein besonders einfacher Seilspanner verwendet, bei welchem die Vorspannung und der Toleranzausgleich ohne ein Verdrehen des Seilelementes einstellbar ist.

Bevorzugt ist das Seilelement aus mindestens einem Tragseil gebildet. Je nach Anordnung des Funktionselementes, z.B. einer Lenksäule auf der Ober- und/oder Unterseite des Grund- oder Querträgers ist das Seilelement, eine offene Schlinge bildend am Grundträger gehaltert. Dabei umschlingt das eine Ende des Seilelements zumindest teilweise den Grundträger, wobei es mit dem anderen Ende an der Druckstrebe oder einem weiteren Träger vorspannbar gehalten ist. Zusätzlich können geeignete Mittel zur Festlegung bzw. Lagerung des Trägers innerhalb der offenen Schlinge vorgesehen sein, wobei durch die Festlegung des Trägers eine Torsionskraft zum Aufbringen eines rückdrehenden Momentes gegen das Aufstellen der Lenksäule erzeugt wird. Alternativ oder zusätzlich kann das als Tragseil ausgebildete Seilelement stabförmig gehalten sein. Dabei ist das Trag- oder Zugseil zwischen der Druckstrebe und dem Grundträger unter Vorspannung in der Art eines starren Stabes gehalten.

Mit zunehmender Anzahl von auf den Grundträger anzuordnenden Funktionselementen sind zweckmäßigerweise mehrere Seilelemente fächerförmig zur Abstützung des Grundträgers an dem weiteren Träger oder der Druckstrebe befestigt. Dabei werden die Seilelemente im Prinzip eines Speichenrades zwischen dem weiteren Träger'und dem Grundträger angeordnet.
Die mit der Erfindung erzielten Vorteile bestehen insbesondere darin, dass durch die zugfeste Anordnung des Grundträgers an einen weiteren Träger mittels eines Seilelementes eine besonders hohe Gewichtsreduzierung für die Querträgeranordnung gegeben ist. Das Seilelement ermöglicht darüber hinaus eine einfache Konstruktion mit einer Vielzahl von verschiedenen Anordnungen eines oder mehrerer Seilelemente zur Abstützung des Grundträgers, welche besonders einfach zu montieren sind und darüber hinaus verschiedene technische Anforderungen erfüllen können. Des Weiteren weist eine durch ein Seilelement ausgeführte Abstützung des Grundträgers einen besonders geringen Bauraum auf.

Ausführungsbeispiele der Erfindung werden anhand einer Zeichnung erläutert. Darin zeigen:

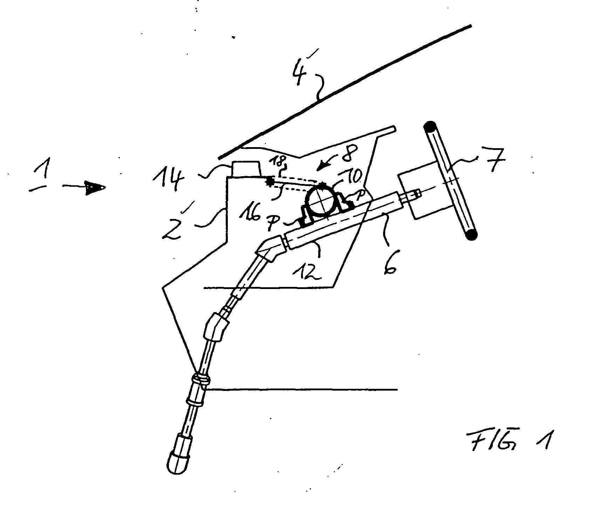

Figuren 1 bis 6 schematisch verschiedene Ausführungsformen einer Querträgeranordnung mit einem mittels eines Seilelements an einem Karosserieelement, insbesondere an einem weiteren Träger zugfest gehaltenen Grundträger.

Einander entsprechende Teile sind in allen Figuren mit den gleichen Bezugszeichen versehen.

Figur 1 zeigt einen vergrößerten Ausschnitt eines Fahrzeugs 1 im Frontbereich mit einer die Fahrzeugstruktur bildenden Karosserie 2 und einer eine Karosseriefläche bildenden Frontscheibe 4 sowie einer Lenksäule 6 mit Lenkrad 7 zur Lenkung des Fahrzeugs 1. Zur Befestigung der Lenksäule 6 an der Karosserie 2 ist eine Querträgeranordnung 8 vorgesehen. Die Querträgeranordnung 8 umfasst einen Grundträger 10 zur Aufnahme oder Anbindung von Funktionselementen 12, z.B. der Lenksäule 6. Dabei verläuft der Grundträger 10 oberhalb der Lenkspindel oder Lenksäule 6. Die Lenksäule 6 ist mittels L-förmigen oder U-förmigen Profilen P an dem Grundträger 10 befestigt. Des Weiteren umfasst die Querträgeranordnung 8 einen weiteren Träger 14, welcher unterhalb der Frontscheibe 4 angeordnet ist.

Für eine druck- und/oder zugfest ausgebildete Querträgeranordnung 8 ist der Grundträger 10 in Querrichtung des Fahrzeug 1 druckfest gehalten. In Längsrichtung des Fahrzeugs 1 ist der Grundträger 10 zumindest teilweise zugfest gehalten. Dazu umfasst die Querträgeranordnung 8 ein Seilelement 16. Das Seilelement 16 ist an dem Träger 14 befestigt. Alternativ zur Befestigung am Träger 14 kann das Seilelement 16 zur Abstützung des Grundträgers 10 an einer nicht näher dargestellten Druckstrebe der Karosserie 2 befestigt werden. Dabei kann die Druckstrebe sogenannte Sollknickstellen aufweisen, wodurch im Fall von mechanischer Beanspruchung der Querträgeranordnung 8 ein definiertes Verformen an den Sollknickstellen unter Vermeidung einer Intrusion oder eines Aufstellen der Lenksäule 6 gegeben ist.

Für einen darüber hinaus gehenden Schutz vor Intrusion des als Lenksäule 6 ausgebildeten Funktionselements 12 ist das Seilelement 16 zwischen dem Träger 14 und dem Grundträger 10 unter Vorspannung gehalten. Dazu ist das Seilelement 16 an einem Ende, z.B. am Träger 14, fixiert und am gegenüberliegenden Ende, z.B. am Grundträger 10, oder umgekehrt vorspannbar gehalten. Am das Seilelement 16 fixierenden Ende ist das Seilelement 16 beispielsweise in einem Bajonett-Verschluss eingehängt. Es sind aber auch andere das Seilelement 16 fixierende Befestigungen einsetzbar. Am anderen Ende wird das Seilelement 16 mittels eines Seilspanners durch Schrauben vorgespannt und mit Vorspannung gehalten. Dabei ist die Vorspannung und der Toleranzausgleich ohne ein Verdrehen des Seilelementes 16 einstellbar. Für eine sowohl druck- als auch zugfeste Anbindung des Grundträgers 10 an den Träger 14 kann das Seilelement 16 in einem Hohlprofil 18 oder Rohr geführt sein. Für eine hohe mechanische Beanspruchung hinreichend aufnehmende, zugfeste Verbindung ist das Seilelement 16 bevorzugt als Stahldraht ausgebildet.

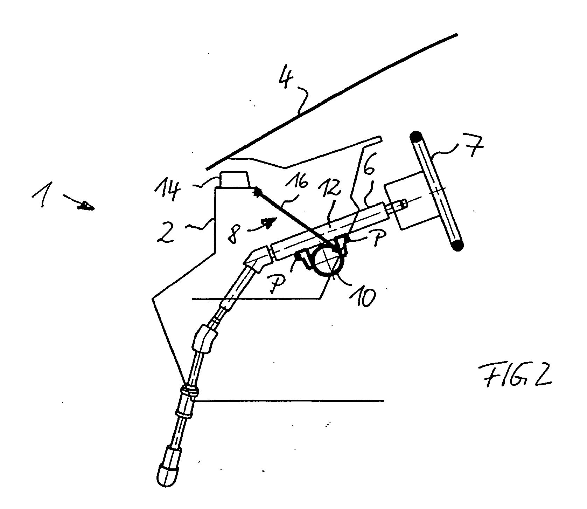

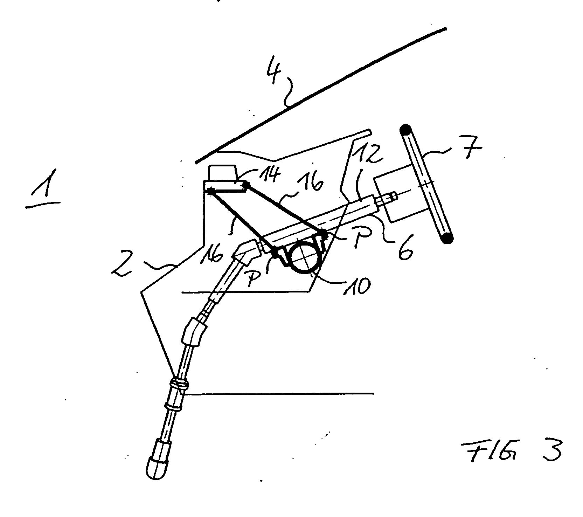

Figur 2 zeigt eine alternative Querträgeranordnung 8 mit einem unterhalb der Lenksäule 6 verlaufenden Grundträger 10. Dabei ist das Seilelement 16 beispielsweise am Grundträger 10 fixierend gehalten und am Träger 14 vorspannbar gehalten. Figur 3 zeigt eine weitere Ausführungsform einer Querträgeranordnung 8. Für eine möglichst zugfeste Haltung des Grundträgers 10 an der Karosserie 2, insbesondere am Träger 14 verlaufen mehrere Seilelemente 16 zwischen dem Grundträger 10 und dem Träger 14.

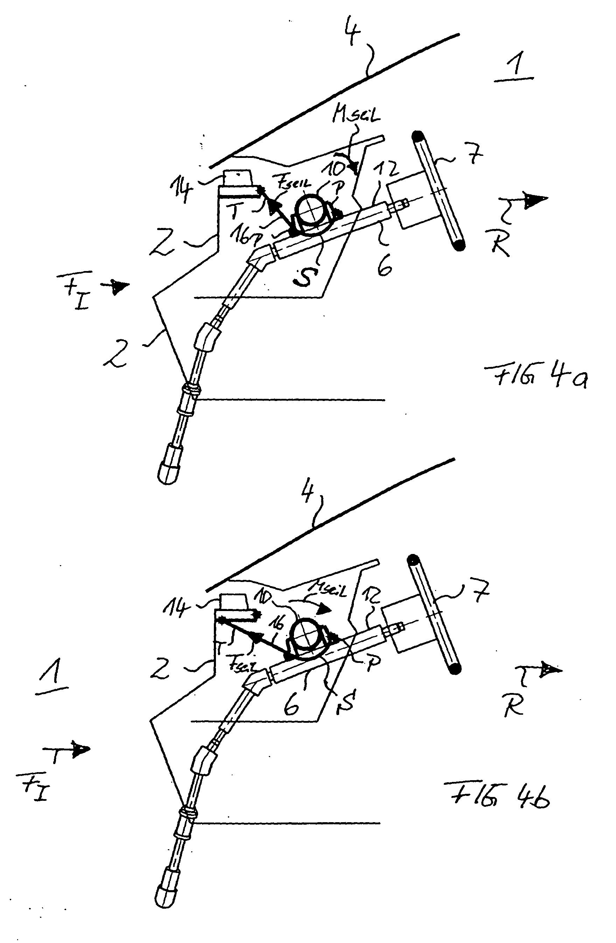

Die Figuren 4a, 4b zeigen jeweils eine weitere Ausführungsform der Querträgeranordnung 8 mit einem oberhalb der Lenksäule 6 verlaufenden Grundträger 10. Dabei ist das Seilelement 16 als Tragseil T mit einer die Lenksäule 6 und den Grundträger 10 zumindest teilweise umlaufenden offenen Schlinge S ausgebildet. Die Intrusionskraft Fₗ führt zu einem Aufstellen der Lenksäule 6 in Richtung des Fahrzeuginnenraumes R, wodurch die mittels des Seilelements 16 ausgeübte Seil- oder Zugkraft Fₛₑᵢₗ ein absenkendes Moment Mₛₑᵢₗ für die Lenksäule 6 ergibt und somit ein Aufstellen der Lenksäule 6 unterdrückt. Je nach Art und Ausbildung der Querträgeranordnung 8 ist dabei das Tragseil T an der dem Lenkrad 7 zugewandten Seite des Trägers14 oder an der vom Lenkrad 7 abgewandten Seite des Trägers 14 befestigt.

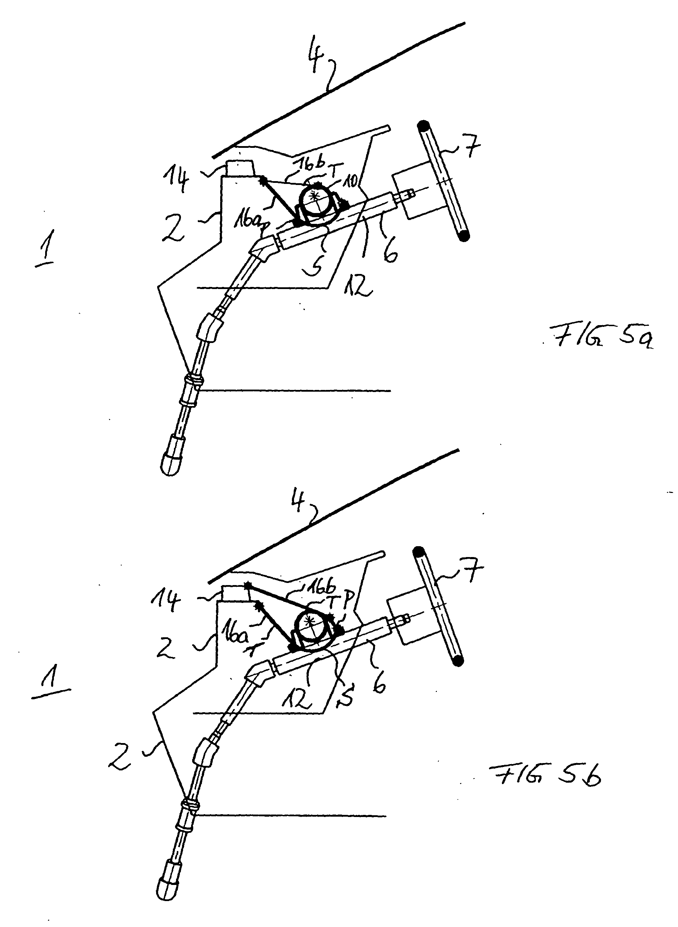

Die Figuren 5a, 5b zeigen eine weitere alternative Ausführung der Querträgeranordnung 8. Dabei ist der Grundträger 10 über zwei als Zug- oder Tragseile T ausgebildete Seilelemente 16a, 16b am Träger 14 zugfest gehalten. In Figur 5a sind die beiden Tragseile T an ein- und demselben Punkt am Träger 14 gehalten. In Figur 5b sind die beiden Tragseile T an voneinander beabstandeten Punkten am Träger 14 gehalten. Das Seilelement 16a bildet eine um die Lenksäule 6 und den Grundträger 10 verlaufende offene und vorgespannte Schlinge S. Das zweite Seilelement 16b ist stabförmig zwischen dem Grundträger 10 und dem Träger 14 vorgespannt gehalten.

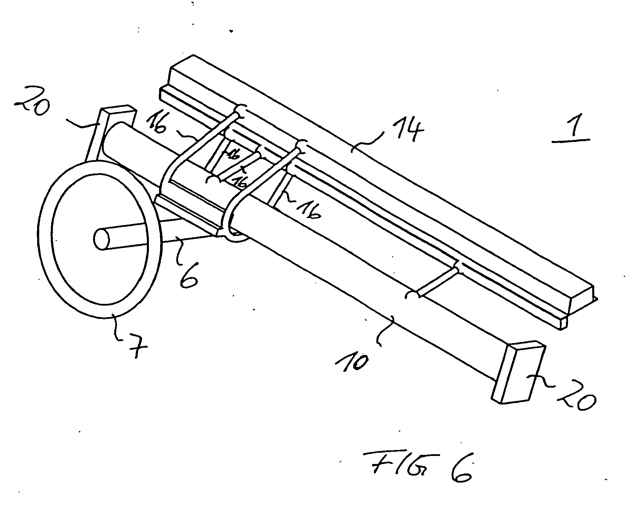

Figur 6 zeigt eine alternative Querträgeranordnung 8 in perspektivischer Darstellung. Dabei sind mehrere Seilelemente 16 zwischen dem Grundträger 10 und dem Träger 14 vorgespannt mit offener Schlinge S und/oder stabförmig gehalten. Insbesondere bilden die mittleren Seilelemente 16 eine speichenradähnliche Anordnung. Darüber hinaus ist der Grundträger 10 in Querrichtung über Halteelemente 20 seitlich an der Karosserie 2 druckfest befestigt.

Je nach Vorgabe und Ausführung der Querträgeranordnung 8 sind weitere Seilkonstruktionen möglich, beispielsweise können mehrere Seilelemente 16 analog einem Stabwerk oder eines Netzes unter Vorspannung zur zugfesten Anordnung des Grundträgers 10 an der Karosserie 2 angeordnet sein. Dabei können die Seilelemente 16 z.B. an anderen Karosserieelementen, wie an einer A-Säule, einem Mitteltunnel oder einem anderen Quer- oder Längsträger gehalten werden.

### Bezugszeichenliste

- 1: Fahrzeug
- 2: Karosserie
- 4: Frontscheibe
- 6: Lenksäule
- 7: Lenkrad
- 8: Querträgeranordnung
- 10: Grundträger
- 12: Funktionselement
- 14: weiterer Träger
- 16, 16a, 16b: Seilelement
- 18: Hohlprofil
- 20: Halteelemente

## Patentansprüche

1. Querträgeranordnung (8) für ein Fahrzeug (1) mit einem zwischen seitlichen Karosserieflächen (2) angeordneten Grundträger (10) zur Aufnahme von Funktionselementen (12), **dadurch gekennzeichnet, dass** der Grundträger (10) mittels eines Seilelements (16, 16a, 16b) zumindest teilweise zugfest gehalten ist, wobei das Seilelement eine offene Schlinge (S) bildend gehalten ist und ein Ende des Seilelements zumindest teilweise den Grundträger umschlingt.

2. Querträgeranordnung nach Anspruch 1, bei dem der Grundträger (10) in Querrichtung druckfest befestigt ist.

3. Querträgeranordnung nach Anspruch 1 oder 2, bei dem der Grundträger (10) in Längsrichtung zugfest gehalten ist.

4. Querträgeranordnung nach einem der vorhergehenden Ansprüche, bei dem das Seilelement (16, 16a, 16b) an einem weiteren Träger (14) oder an einer Druckstrebe befestigt ist.

5. Querträgeranordnung nach einem der vorhergehenden Ansprüche, bei dem das Seilelement (16, 16a, 16b) aus einem Stahldraht gebildet ist.

6. Querträgeranordnung nach einem der vorhergehenden Ansprüche, bei dem das Seilelement (16, 16a, 16b) in einem Hohlprofil geführt ist.

7. Querträgeranordnung nach einem der vorhergehenden Ansprüche, bei dem das Seilelement (16, 16a, 16b) an einem Ende fixiert und am gegenüberliegenden Ende vorspannbar gehalten ist.

8. Querträgeranordnung nach einem der vorhergehenden Ansprüche, bei dem das Seilelement (16, 16a, 16b) aus mindestens einem Tragseil (T) gebildet ist.

9. Querträgeranordnung nach einem der vorhergehenden Ansprüche, bei dem das Seilelement (16, 16a, 16b) stabförmig gehalten ist.

10. Querträgeranordnung nach einem der vorhergehenden Ansprüche, bei dem mehrere Seilelemente (16, 16a, 16b) fächerförmig angeordnet sind.

11. Querträgeranordnung nach einem der vorhergehenden Ansprüche, bei dem am Grundträger (10) als Funktionselement (12) eine Lenksäule (6) befestigt ist.

12. Querträgeranordnung nach Anspruch 11, bei dem der Grundträger (10) unterhalb und/oder oberhalb der Lenksäule (6) verläuft.

## Claims

1. Crossmember assembly (6) for a vehicle (1), with a base member (10) located between lateral body surfaces (2) for the accommodation of functional elements (12), **characterised in that** the base member (10) is held at least partially tension-resistant by means of a cable element (16, 16a, 16b), wherein the cable element is arranged to form an open loop (S) and one end of the cable element is at least partially wrapped around the base member.

2. Crossmember assembly according to claim 1, wherein the base member (10) is secured pressure-resistant in the transverse direction.

3. Crossmember assembly according to claim 1 or 2, wherein the base member (10) is held tension-resistant in the longitudinal direction.

4. Crossmember assembly according to any of the preceding claims, wherein the cable element (16, 16a, 16b) is secured to a further member (14) or to a strut.

5. Crossmember assembly according to any of the preceding claims, wherein the cable element (16, 16a, 16b) id made of steel wire.

6. Crossmember assembly according to any of the preceding claims, wherein the cable element (16, 16a, 16b) is guided in a hollow section.

7. Crossmember assembly according to any of the preceding claims, wherein the cable element (16, 16a, 16b) is fixed at one end and preloadably held at the opposite end.

8. Crossmember assembly according to any of the preceding claims, wherein the cable element (16, 16a, 16b) is made up of at least one carrying cable.

9. Crossmember assembly according to any of the preceding claims, wherein the cable element (16, 16a, 16b) is held in a rod-shaped manner.

10. Crossmember assembly according to any of the preceding claims, wherein a plurality of cable elements (16, 16a, 16b) is arranged in the shape of a fan.

11. Crossmember assembly according to any of the preceding claims, wherein a steering column (6) is secured to the base member (10) as a functional element.

12. Crossmember assembly according to claim 11, wherein the base member (10) extends below and/or above the steering column (6).

## Revendications

1. Agencement de traverse (8) pour un véhicule (1), comprenant un support de montage (10) disposé entre des surfaces latérales (2) de la carrosserie et servant au logement d'éléments fonctionnels (12),
**caractérisé en ce que** le support de montage (10) est tenu, au moyen d'un élément à câble (16, 16a, 16b), en étant au moins partiellement résistant à la traction, où l'élément à câble est tenu en formant une élingue ouverte (S), et une extrémité de l'élément à câble entoure au moins partiellement le support de montage.

2. Agencement de traverse selon la revendication 1, dans lequel le support de montage (10) est fixé en résistant à la pression dans le sens transversal.

3. Agencement de traverse selon la revendication 1 ou 2, dans lequel le support de montage (10) est tenu en résistant à la traction dans le sens longitudinal.

4. Agencement de traverse selon l'une quelconque des revendications précédentes, dans lequel l'élément à câble (16, 16a, 16b) est fixé sur un autre support (14) ou sur une barre d'appui.

5. Agencement de traverse selon l'une quelconque des revendications précédentes, dans lequel l'élément à câble (16, 16a, 16b) est formé par un fil d'acier.

6. Agencement de traverse selon l'une quelconque des revendications précédentes, dans lequel l'élément à câble (16, 16a, 16b) est guidé dans un profil creux.

7. Agencement de traverse selon l'une quelconque des revendications précédentes, dans lequel l'élément à câble (16, 16a, 16b) est fixé à une extrémité et tenu au niveau de l'extrémité opposée en pouvant être préalablement tendu.

8. Agencement de traverse selon l'une quelconque des revendications précédentes, dans lequel l'élément à câble (16, 16a, 16b) est formé par au moins un câble porteur (T).

9. Agencement de traverse selon l'une quelconque des revendications précédentes, dans lequel l'élément à câble (16, 16a, 16b) est tenu en forme de barre.

10. Agencement de traverse selon l'une quelconque des revendications précédentes, dans lequel plusieurs éléments à câble (16, 16a, 16b) sont disposés en forme d'éventail.

11. Agencement de traverse selon l'une quelconque des revendications précédentes, dans lequel une colonne de direction (6), en tant qu'élément fonctionnel (12), est fixée sur le support de montage (10).

12. Agencement de traverse selon la revendication 11, dans lequel le support de montage (10) s'étend au-dessous et / ou au-dessus de la colonne de direction (6).
